# EUROPÄISCHE PATENTSCHRIFT

(11) **EP 0 886 823 B1**
(45) Veröffentlichungstag und Bekanntmachung des Hinweises auf die Patenterteilung: **07.03.2001**
(21) Anmeldenummer: 97951110.2
(22) Anmeldetag: 05.12.1997
(51) Int. Cl.: G06F 11/00

(54) **VERFAHREN ZUR ÜBERPRÜFUNG DER FUNKTIONSFÄHIGKEIT EINER RECHENEINHEIT**
METHOD OF CHECKING THE OPERABILITY OF A COMPUTING UNIT
PROCEDE POUR CONTROLER LE FONCTIONNEMENT D'UNE UNITE DE CALCUL

(30) Priorität: 20.12.1996 DE 19653551
(43) Veröffentlichungstag der Anmeldung: 30.12.1998
(73) Patentinhaber: SIEMENS AKTIENGESELLSCHAFT, 80333 München (DE)
(72) Erfinder: ZIEGLER, Herbert, D-94369 Rain (DE); MERL, Richard, D-92421 Schwandorf (DE); JOUVENAL, Horst, D-75446 Wiernsheim (DE); PETERS, Dietmar, D-93059 Regensburg (DE); SCHMID, Johann, D-93413 Cham (DE)
(86) Internationale Anmeldenummer: DE9702847
(87) Internationale Veröffentlichungsnummer: WO9828687

(56) Entgegenhaltungen:
- GB-A- 2 153 564
- US-A- 5 581 794

## Beschreibung

Die Erfindung beschreibt ein Verfahren zur Überprüfung der Funktionsfähigkeit einer Recheneinheit nach dem Oberbegriff des Anspruchs 1.

Sicherheitsrelevante Funktionen werden zunehmend, insbesondere im Kraftfahrzeug, von einer Recheneinheit gesteuert. Die Recheneinheit ist deshalb auf eine korrekte Funktionsweise zu überprüfen. Eine korrekte Funktionsweise der Recheneinheit beinhaltet eine zeitgerechte Abarbeitung der vorgegebenen Funktionen, die beispielsweise anhand einer Laufzeitüberwachung überprüft wird.

Aus DE 41 14 999 A1 ist ein System zur Steuerung eines Kraftfahrzeugs bekannt, bei dem eine erste Recheneinheit zur Bestimmung der Steuerdaten eines Kraftfahrzeugs und eine zweite Recheneinheit zur Überwachung der ersten Recheneinheit vorgesehen sind. Die erste Recheneinheit und die zweite Recheneinheit sind jeweils mit einer unabhängigen Zeitbasis verbunden. Die zweite Recheneinheit gibt der ersten Recheneinheit erste Daten vor, aus denen die erste Recheneinheit nach einer Rechenvorschrift ein Ergebnis berechnet, das diese wieder an die zweite Recheneinheit zurückgibt. Die zweite Recheneinheit überprüft, ob die von der ersten Recheneinheit zurückgegebenen Daten korrekt und rechtzeitig zurückgegeben werden.

Die Aufgabe der Erfindung beruht darin, eine Verbesserung der Überwachung der korrekten Funktionsweise der ersten Recheneinheit bereit zu stellen.

Die Aufgabe der Erfindung wird durch die Merkmale des Anspruchs 1 gelöst.

Ein wesentlicher Vorteil der Erfindung beruht darin, daß die Abarbeitung einzelner Funktionen, die von der ersten Recheneinheit abgearbeitet werden, überprüft wird.

Vorteilhafte Ausbildungen und Verbesserungen der Erfindung sind in den Unteransprüchen angegebenen.

Die Erfindung wird anhand der Figuren näher erläutert; es zeigen:
- Figur 1: einen schematischen Aufbau einer Steueranordnung für ein Kraftfahrzeug,
- Figur 2: einen schematischen Programmablauf zur Durchführung des erfindungsgemäßen Verfahrens und
- Figur 3: ein Datenwort für sicherheitsrelevante Funktionen.

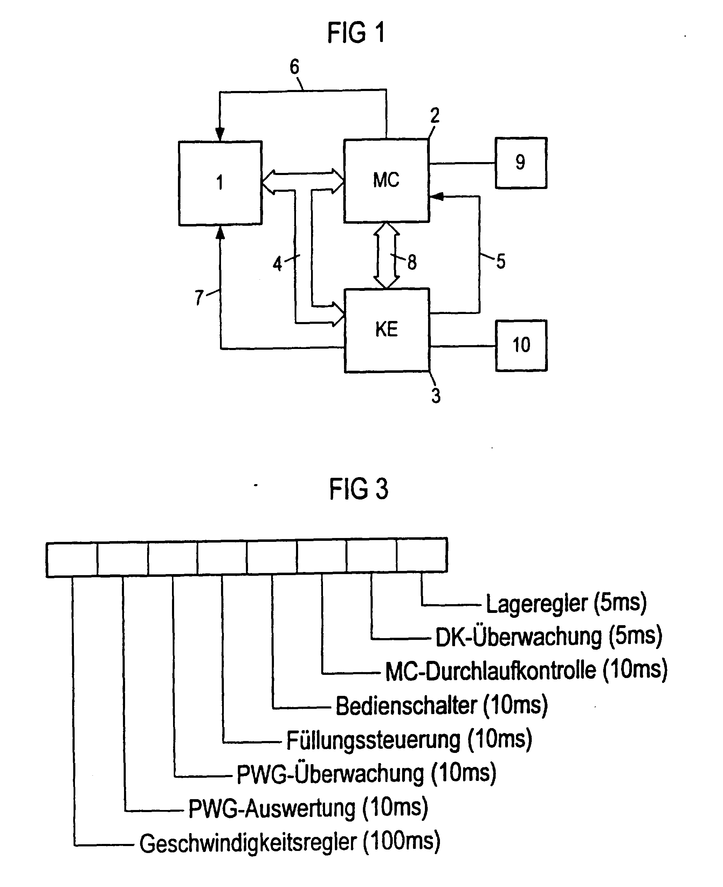

Im folgenden wird am Beispiel der Figur 1, das schematisch eine Vorrichtung zum Steuern eines Kraftfahrzeugs darstellt, die Erfindung näher erläutert. Figur 1 zeigt einen Kraftfahrzeugblock 1, der schematisch die in einem Kraftfahrzeug zu regelnden und steuernden Stellglieder darstellt. Der Kraftfahrzeugblock 1 weist beispielsweise eine elektronische Leistungsteuerung, ein elektronisches Bremssystem oder eine automatische Fahrgeschwindigkeitsregelung auf. Zudem sind in dem Kraftfahrzeugblock 1 die entsprechenden Sensoren und Geber beinhaltet, die die jeweilige Stellung der entsprechenden Stellglieder und die Betriebsparameter des Kraftfahrzeugs und der Umwelt erfassen.

Die Stellglieder und Sensoren des Kraftfahrzeugblocks 1 sind über einen Datenbus 4 mit einer ersten Recheneinheit 2 verbunden. Vorzugsweise sind die Stellglieder und Sensoren des Kraftfahrzeugblocks 1 auch mit einer zweiten Recheneinheit 3 über den Datenbus 4 verbunden. Die erste und die zweite Recheneinheit 2, 3 stehen miteinander über eine bidirektionale Datenleitung 8 in Verbindung.

Weiterhin ist die erste Recheneinheit 2 über eine Steuerleitung 6 mit den entsprechenden Stellgliedern des Kraftfahrzeugblocks 1 verbunden. Die zweite Recheneinheit 3 ist über eine Ansteuerleitung 5 mit der ersten Recheneinheit 2 und vorzugsweise über eine zweite Steuerleitung 7 mit den entsprechenden Stellgliedern des Kraftfahrzeugblocks 1 verbunden. Die erste Recheneinheit 2 und die zweite Recheneinheit 3 sind jeweils an einen ersten bzw. zweiten Speicher 9, 10 angeschlossen.

Im folgenden wird die Anordnung der Figur 1 am Beispiel der elektronischen Leistungssteuerung einer Brennkraftmaschine mit Drosselklappe beschrieben: Der Drosselklappe ist ein Geber zugeordnet, der über den Datenbus 4 die Stellposition der Drosselklappe an die erste Recheneinheit 2 gibt. Zudem werden der ersten Recheneinheit 2 über die Sensoren des Kraftfahrzeugblocks 1 Informationen über die Betriebsbedingungen des Kraftfahrzeugs und vorzugsweise weitere Informationen über Außenbedingungen wie zum Beispiel die Umgebungstemperatur, die Straßenfeuchtigkeit usw. zugeführt.

Die erste Recheneinheit 2 berechnet nun aufgrund der Betriebsbedingungen des Kraftfahrzeugs nach vorgegebenen Funktionen und/oder Tabellen, die im ersten Speicher 9 abgelegt sind, die Stellposition, die die Drosselklappe einnehmen soll. Nach der Berechnung der Stellposition steuert die erste Recheneinheit 2 über die Steuerleitung 6 den Steller, der der Drosselklappe zugeordnet ist, mit einem der berechneten Stellposition entsprechenden Signal an.

In einer einfachen Ausführung ist die zweite Recheneinheit 3 nicht mit dem Datenbus 4 verbunden und verfügt auch nicht über die zweite Steuerleitung 7. In diesem Fall überprüft die zweite Recheneinheit 3 durch einen Datenaustausch über die Datenleitung 8 nach einem vorgegebenen Verfahren, das im zweiten Speicher 10 abgelegt ist, die korrekte Funktionsweise der ersten Recheneinheit 2.

In einer Weiterbildung der Erfindung ist die zweite Recheneinheit 3 auch an den Datenbus 4 angeschlossen und verfügt über die zweite Steuerleitung 7. In diesem Fall berechnet die zweite Recheneinheit 3 für bestimmte Stellglieder aus den von den Sensoren des Kraftfahrzeugs gelieferten Betriebsbedingungen und den abgelegten Funktionen und/oder Tabellen neue Stellpositionen. Nach der Berechnung der neuen Stellpositionen steuert die zweite Recheneinheit 3 über die zweite Steuerleitung 7 die entsprechenden Stellglieder entsprechend an. Die Funktionen und/oder Tabellen zur Berechnung der Positionen der Stellglieder sind im zweiten Speicher 10 abgelegt.

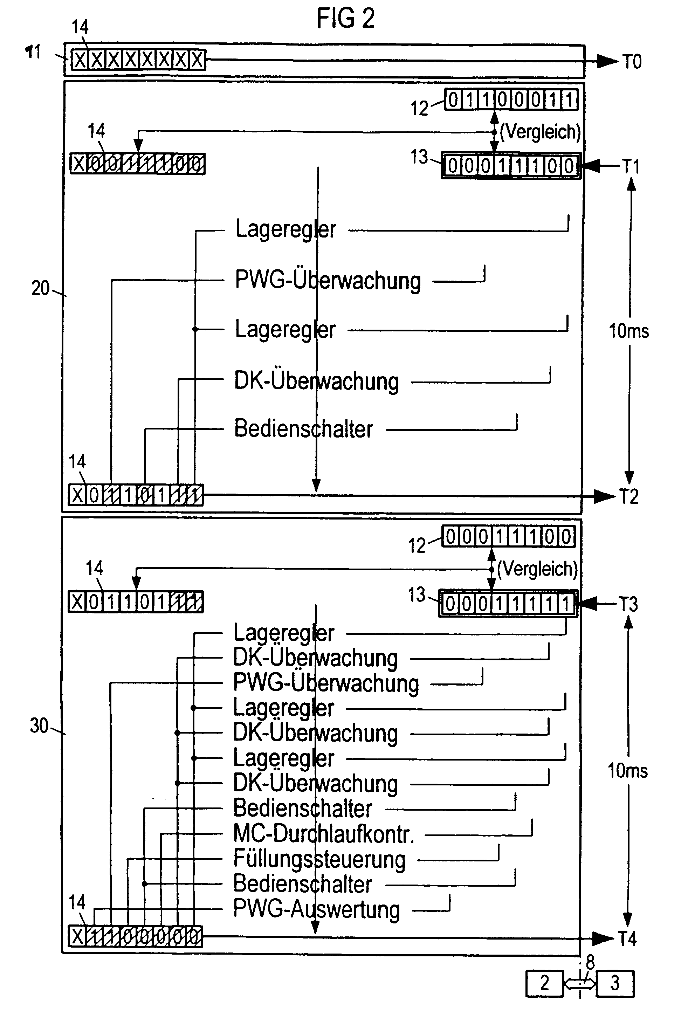

Figur 2 zeigt einen schematischen Programmablauf, mit dem die zweite Recheneinheit 3 über einen Datenaustausch die erste Recheneinheit 2 auf eine korrekte Funktionsweise, insbesondere auf eine zeitgenaue Abarbeitung der vorgegebenen Funktionen, überwacht. In dem beschriebenen Beispiel ist der zeitliche Ablauf in Zeitscheiben eingeteilt, bei deren Beginn jeweils die zweite Recheneinheit 3 der ersten Recheneinheit 2 ein Datenwort 13 zuführt und bei deren Ende die erste Recheneinheit 2 der zweiten Recheneinheit 3 ein Sicherheitswort zurückgibt. Eine Zeitscheibe dauert eine vorgegebene Zeitdauer, vorzugsweise 10 ms.

In der ersten Zeitscheibe 11 gibt die erste Recheneinheit 2 zum Zeitpunkt To ein Sicherheitswort 14, das in diesem Fall aus acht Bits besteht, an die zweite Recheneinheit 3.

Die zweite Recheneinheit 3 gibt anschließend zu Beginn der zweiten Zeitscheibe 20 zum Zeitpunkt T1 ein Datenwort 13 an die erste Recheneinheit 2. Die erste Recheneinheit 2 vergleicht das Datenwort 13 mit einem im ersten Speicher 9 abgelegten Referenzwort 12. Bei diesem Vergleich werden die einzelnen Bits des Datenwortes 13 mit den entsprechenden einzelnen Bits des Referenzwortes 12 verglichen. Weist nun ein Bit des Datenwortes 13 einen anderen Wert auf, als das entsprechende Bit des Referenzwortes 12, so wird der Wert des entsprechenden Bits des Datenwortes von der ersten Recheneinheit 2 an die entsprechende Position eines Sicherheitswortes 14 geschrieben, das ebenfalls im ersten Speicher 9 abgelegt ist.

Die Bitpositionen werden im folgenden von rechts nach links mit der Position 1 bis 8 bezeichnet. Das Referenzwort 12 weist an der ersten Position den Wert 1, an der zweiten Position den Wert 1, an der dritten Position den Wert 0, an der vierten Position den Wert 0, an der fünften Position den Wert 0, an der sechsten Position den Wert 1, an der siebten Position den Wert 1 und an der achten Position den Wert 0 auf.

Das Datenwort 13 weist an der ersten Position den Wert 0, an der zweiten Position den Wert 0, an der dritten Position den Wert 1, an der vierten Position den Wert 1, an der fünften Position den Wert 1, an der sechsten Position den Wert 0, an der siebten Position den Wert 0 und an der achten Position ebenfalls den Wert 0 auf.

Damit unterscheiden sich die Bits des Datenwortes 13 von der ersten Position bis zur siebten Position von den entsprechenden Bits des Referenzwortes 12. Somit schreibt die erste Recheneinheit 2 in das Sicherheitswort 14 die Werte der ersten sieben Bits des Datenwortes 13 in die entsprechenden ersten sieben Positionen des Sicherheitswortes 14. Dies ist in Figur 2 durch eine Schraffur der entsprechenden Bits dargestellt.

Das Datenwort 13 und das Sicherheitswort 14 sind so aufgebaut, daß jedes Bit mindestens einer Funktion, insbesondere einer Funktion des Kraftfahrzeuges, zugeordnet ist. In dem dargestellten Beispiel ist das Bit der ersten Position der Lageregelung der Drosselklappe, das Bit der zweiten Position der Überwachung der Drosselklappe, bei der die Stellposition der Drosselklappe mit einem zulässigen Bereich verglichen wird, das Bit der vierten Position der Betätigung des Bedienschalter und das Bit der sechsten Position einer Pedalwertgeberüberwachung (PWG-Überwachung), bei der die Stellposition des Pedals mit einem zulässigen Bereich verglichen wird, zugeordnet.

Führt nun die erste Recheneinheit 2 eine Funktion durch, so wird nach der Durchführung der Funktion das der Funktion entsprechende Bit des Sicherheitswortes 14 im Vergleich zu dem Wert des entsprechenden Bits des Datenwortes 13 invertiert. Es ist jedoch auch möglich das Sicherheitswort 14 vor der Durchführung der Funktion oder während der Durchführung der Funktion zu ändern. Das veränderte Bit zeigt im wesentlichen an, daß eine vorgegebene Stelle des Programmes zu einem vorgegebenen Zeitpunkt erreicht wurde.

Zum Beispiel wird in der zweiten Zeitscheibe 20 nach Durchführung der Drosselklappenüberwachung (DK-Überwachung) das Bit, das an der zweiten Position im Sicherheitswort 14 steht, von dem Wert 0 auf den Wert 1 verändert. Ebenso wird nach der Durchführung der Pedalwertgeberüberwachung das Bit, das an der sechsten Position des Sicherheitswortes 14 steht, von dem Wert 0 auf den Wert 1 verändert. Entsprechend wird auch bei der Lageregelung (Lageregler) und bei dem Bremspedal (Bedienschalter) verfahren.

Die erste Recheneinheit 2 speichert das im zweiten Zeitbereich 20 eingegebene Datenwort 13 als neues Referenzwort 14 für die dritte Zeitebene 30 ab.

Wird nun eine Funktion von der ersten Recheneinheit 2 zweimal nacheinander durchgeführt, so wird der Wert des entsprechenden Bits im Sicherheitswort 14 nur beim ersten Mal gegenüber dem Wert des Datenwortes 13 invertiert und beim zweiten Mal bleibt der einmal invertierte Wert erhalten, da die erste Recheneinheit 2 nach der Abarbeitung einer Funktion in das entsprechende Bit des Sicherheitswortes 14 den invertierten Wert des entprechenden Bits des Datenwortes 13 einschreibt. Dies ist in der zweiten Zeitscheibe 20 am Beispiel des Lagereglers explizit dargestellt.

Die erste Recheneinheit 2 gibt das durch die Abarbeitung von Funktionen entsprechend veränderte Sicherheitswort 14 zu einem vorgegebenen Zeitpunkt T2 am Ende der zweiten Zeitscheibe 20 an die zweite Recheneinheit 3. Im beschriebenen Ausführungsbeispiel wird das Sicherheitswort 14 vorzugsweise 10 ms nach dem Erhalt des Datenwortes 13 an die zweite Recheneinheit 3 ausgegeben.

Die zweite Recheneinheit 3 überprüft nun die Bits des Sicherheitswortes 14 mit einer vorgegebenen Tabelle, in der angegeben ist, welche Funktionen von der ersten Recheneinheit 2 zu dem gegebenen Zeitpunkt abgearbeitet sein sollten, so daß die entsprechenden Bits gegenüber dem Datenwort 13 einen invertierten Wert aufweisen müssen. Ist der Wert des entsprechenden Bits nicht invertiert, so wird ein Entprellzähler, der der Funktion des entsprechenden Bits zugeordnet ist, von der zweiten Recheneinheit 3 um einen Wert erhöht. Überschreitet der Entprellzähler einen Maximalwert, so wird eine Fehlfunktion der entsprechenden Funktion erkannt.

Die von der ersten Recheneinheit 2 abzuarbeitenden Funktionen werden vorzugsweise zyklisch in verschiedenen Zeitabständen abgearbeitet. Bei dem beschriebenen Beispiel werden die Lageregelung und die Überwachung der Drosselklappe, die den ersten zwei Bits des Datenwortes 13 und des Sicherheitswortes 14 entsprechen, alle 5 ms durchgeführt. Die ersten zwei Bits des Sicherheitswortes 14 werden somit von der zweiten Recheneinheit 3 nach jeder Zeitscheibe überprüft und die ersten zwei Bits des Datenwortes 13 werden vor jeder Zeitscheibe invertiert.

Die erste Recheneinheit 2 arbeitet aber auch Funktionen ab, die nicht in jeder Zeitscheibe durchzuführen sind. Beispielsweise wird die PWG-Überwachung nur alle 10 ms durchgeführt. Da eine Zeitscheibe 10 ms lang ist, kommt es vor, daß in einer Zeitscheibe keine PWG-Überwachung durchzuführen ist. Die zweite Recheneinheit 2 gibt in diesem Fall z.B. in der ersten Zeitscheibe 10 das sechste Bit des Datenwortes 13 im Vergleich zum letzten Datenwort 13 invertiert an die erste Recheneinheit 2. Die zweite Recheneinheit 3 überprüft aber erst nach der dritten Zeitscheibe 30, ob das entprechende Bit des Sicherheitswortes 14 gegenüber dem entsprechenden Bit des Datenwortes 13 invertiert ist. Somit wird ein Bit eines sicherheitswortes 14 nicht nach jeder Zeitscheibe überprüft.

Die zweite Recheneinheit 3 überprüft vorzugsweise die Abarbeitung der Funktionen und damit die Invertierung der entsprechenden Bits des Sicherheitswortes 14 im Vergleich zum Datenwort 13 in einem doppelt so großen zeitlichen Abstand, wie die Wiederholfrequenz der Abarbeitung der Funktionen ist. Auf diese Weise wird verhindert, daß durch eine kleine Taktverschiebung zwischen der ersten und der zweiten Recheneinheit 2,3 ein Fehler erkannt wird, obwohl die erste Recheneinheit 2 richtig arbeitet.

Der Zeitabstand zwischen der Invertierung eines Bits im Datenwort 13 und der Überprüfung des entsprechenden Bits des Sicherheitswortes 14 kann jedoch entsprechend den abzuarbeitenden Funktionen angepaßt werden.

Die Funktion der Geschwindigkeitsregelung, die dem achten Bit des Datenwortes 13 und dem achten Bit des Sicherheitswortes 14 entspricht, sollte alle 100 ms durchgeführt werden. Das achte Bit des Sicherheitswortes 14 wird somit 200 ms nach der Invertierung des entsprechenden Bits im Datenwort 13 auf eine Invertierung gegenüber dem Bit im Datenwort 13 überprüft.

Die zweite Recheneinheit 3 gibt für die dritte Zeitebene 30 zum Zeitpunkt T3 ein neues Datenwort 13 an die erste Recheneinheit 2. Das neue Datenwort 13 wird aus dem Datenwort 13, das für die zweite Zeitebene 20 der ersten Recheneinheit 2 zugeführt wurde, folgendermaßen bestimmt: Die Bits, die von der zweiten Recheneinheit 3 zuletzt überprüft wurden und deren Funktionen zu diesem Zeitpunkt von der ersten Recheneinheit 2 abgearbeitet sein sollten, werden im neuen Datenwort 13 gegenüber dem alten Datenwort 13 invertiert. Die anderen Bits werden von dem Datenwort 13 der zweiten Zeitebene 20 übernmommen.

Die erste Recheneinheit 2 vergleicht in der dritten Zeitebene 30 das Datenwort 13 mit dem Referenzwort 12, das dem Datenwort 13 der zweiten Zeitebene 20 entspricht. Die Bits, die im Datenwort 13 gegenüber dem Referenzwort 12 unterschiedlich sind, werden in das Sicherheitswort 14 der dritten Zeitebene 30 übertragen, das dem geänderten Sicherheitswort 14 der zweiten Zeitebene 20 entspricht.

In der dritten Zeitebene 30 unterscheidet sich das Datenwort 13 von dem Referenzwort 12 im ersten und im zweiten Bit. Somit schreibt die erste Recheneinheit 2 das erste und das zweite Bit des Datenwortes 13 in das Sicherheitswort 14. Dies ist durch eine gestrichelte Markierung des ersten und des zweiten Bits des Sicherheitswortes 14 in der dritten Zeitebene 30 angedeutet.

In der dritten Zeitebene 30 werden die Funktionen des ersten bis zum siebten Bit des Sicherheitswortes 14 von der ersten Recheneinheit 2 durchgeführt.

Dem ersten Bit des Sicherheitswortes 14 entspricht die Lageregelung, dem zweiten Bit die Überwachung der Drosselklappe, dem dritten Bit die Durchlaufkontrolle der ersten Recheneinheit, dem vierten Bit der Bedienschalter, dem fünften Bit der Füllungssteller, dem sechsten Bit die Pedalwertgeberüberwachung und dem siebten Bit die Pedalwertgeberauswertung. Da die erste Recheneinheit 2 die Funktionen der ersten sieben Bits durchführt, werden die ersten sieben Bits des Sicherheitswortes 14 von der ersten Recheneinheit 2 invertiert. Dies ist in der dritten Zeitscheibe 30 durch eine Strichelung der ersten sieben Bits angedeutet.

Am Ende der dritten Zeitebene 30 wird zum Zeitpunkt T4 das veränderte Sicherheitswort 14 wieder an die zweite Recheneinheit 3 gegeben. Die zweite Recheneinheit 3 vergleicht nun die Bits des Sicherheitswortes 14, die nach der Tabelle zu diesem Zeitpunkt von der ersten Recheneinheit 2 abgearbeitet sein sollten, mit den Bits des Datenwortes 13.

Das Verfahren wird nun in Analogie zu dem Übergang von der zweiten Zeitebene 20 zur dritten Zeitebene 30 bei dem Übergang von der dritte Zeitebene 30 auf die vierte Zeitebene weitergeführt.

Dadurch, daß die einzelnen Bits des Datenwortes 13 und des Sicherheitswortes 14 in regelmäßigen Zeitabständen invertiert werden, werden Kurzschlüsse oder ein fehlerhaftes Halten der Spannung auf einen festen Wert auf den Leitungen zwischen der ersten und der zweiten Recheneinheit 2,3 sicher erkannt. Damit werden auch die Leitungsverbindungen zwischen der ersten und der zweiten Recheneinheit 2,3 auf Fehler überprüft.

Figur 3 zeigt schematisch ein Datenwort 13 für eine vorgegebene Anzahl von Funktionen, die regelmäßig in den in Klammern angegebenen Zeitabständen von der ersten Recheneinheit 2 abgearbeitet werden sollen und damit auch in entsprechenden Zeitabständen von der zweiten Recheneinheit 3 die Abarbeitung überprüft wird.

Vorzugsweise sind die Bits eines Datenwortes 13 so gewählt, daß mindestens ein Bit mit dem Wert 1 und mindestens ein Bit mit dem Wert 0 vorgesehen sind. Damit kann eine Leitungsstörung wie z.B. ein Kurzschluß, der zwischen der ersten und der zweiten Recheneinheit 2,3 auftritt und die Werte aller Bits auf 1, d.h. auf ein hohes Potential, oder 0, d.h. ein niedriges Potential festlegt, nachgewiesen werden.

## Patentansprüche

1. Verfahren zur Überprüfung der Funktionsfähigkeit einer ersten Recheneinheit (2), der von einer zweiten Recheneinheit (3) ein Datenwort (13) vorgegeben wird, das von der ersten Recheneinheit (2) verändert wird bei dem die zweite Recheneinheit (3) überwacht, ob das Datenwort (14) von der ersten Recheneinheit bis zu einem vorgegebenen Zeitpunkt verändert wird, **dadurch gekennzeichnet,**
- daß mindestens ein Bit des Datenwortes (13,14) einer Funktion zugeordnet ist,
- daß von der ersten Recheneinheit (2) das entsprechende Bit verändert wird, wenn die Funktion von der ersten Recheneinheit (2) abgearbeitet wird.

2. Verfahren nach Anspruch 1, dadurch gekennzeichnet, daß die zweite Recheneinheit (3) zu einem vorgegebenen Zeitpunkt (T1,T3) ein Datenwort (13) vorgibt, daß die erste Recheneinheit (2) das Datenwort (13) mit einem Referenzwort (12) vergleicht und die Bits, die gegenüber den entsprechenden Bits des Referenzwortes (12) unterschiedlich sind, in ein Sicherheitswort (14) einschreibt, daß die erste Recheneinheit (2) nach Abarbeitung einer Funktion das der Funktion zugeordnete Bit des Sicherheitsworts (14) ändert, und daß die erste Recheneinheit (2) zu einem vorgegebenen Zeitpunkt (T3,T4) das Sicherheitswort (14) an die zweite Recheneinheit (3) ausgibt.

3. Verfahren nach Anspruch 1, dadurch gekennzeichnet, daß die zweite Recheneinheit (3) aus dem bisherigen Datenwort ein neues Datenwort ermittelt und dieses zu einem vorgegebenen Zeitpunkt (T3) der ersten Recheneinheit (2) vorgibt, wobei die zweite Recheneinheit (3) im neuen Datenwort im Vergleich zum bisherigen Datenwort mindestens das Bit verändert, dessen Funktion von der ersten Recheneinheit (2) in einem vorgegebenen Zeitraum abgearbeitet werden soll.

4. Verfahren nach Anspruch 1, dadurch gekennzeichnet, daß die erste Recheneinheit (2) das von der zweiten Recheneinheit (3) zugeführte Datenwort (13) als Referenzwort (12) ablegt und beim Vergleich mit dem nächsten zugeführten Datenwort (13) als Referenzwort (12) verwendet.

5. Verfahren nach Anspruch 1, dadurch gekennzeichnet, daß die erste Recheneinheit (2) das veränderte Datenwort (13) als Sicherheitswort (14) an die zweite Recheneinheit (3) zurückgibt, und daß die zweite Recheneinheit (3) mindestens ein Bit des Sicherheitswortes (14) mit einem Vergleichswert vergleicht.

6. Verfahren nach Anspruch 5, dadurch gekennzeichnet, daß die zweite Recheneinheit (3) ein Bit des Sicherheitswortes (14) in vorgegeben Zeitabständen überprüft, die von der dem Bit zugeordneten Funktion abhängen.

7. Verfahren nach Anspruch 1, dadurch gekennzeichnet, daß mindestens ein Bit des Datenwortes (13) den Wert 1, d.h. einen High-Zustand, und mindestens ein Bit des Datenwortes (13) den Wert 0, d.h. einen Low-Zustand, aufweist.

## Claims

1. Method of checking the functionality of a first processor (2) which receives a data word (13) from a second processor (3), which data word (13) is modified by the first processor (2), in which the second processor (3) monitors whether the data word (14) is modified by the first processor up to a specified instant, characterized in that
- at least one bit of the data word (13, 14) is assigned to a function,
- in that the first processor (2) modifies the appropriate bit when the function is processed by the first processor (2).

2. Method according to Claim 1, characterized in that the second processor (3) supplies a data word (13) at a specified instant (T1, T3), in that the first processor (2) compares the data word (13) with a reference word (12) and writes those bits which are different than the corresponding bits of the reference word (12) into a safeguard word (14), in that the first processor (2), having processed a function, modifies that bit of the safeguard word (14) which is assigned to the function, and in that the first processor (2) outputs the safeguard word (14) to the second processor (3) at a specified instant (T3, T4).

3. Method according to Claim 1, characterized in that the second processor (3) determines a new data word from the previous data word and supplies it to the first processor (2) at a specified instant (T3), the second processor (3) modifying at least that bit in the new data word, in comparison with the previous data word, whose function is intended to be processed by the first processor (2) in a specified period.

4. Method according to Claim 1, characterized in that the first processor (2) stores the data word (13), supplied by the second processor (3), as a reference word (12) and uses it as a reference word (12) in the comparison with the next data word (13) supplied.

5. Method according to Claim 1, characterized in that the first processor (2) returns the modified data word (13) to the second processor (3) as a safeguard word (14), and in that the second processor (3) compares at least one bit of the safeguard word (14) with a comparison value.

6. Method according to Claim 5, characterized in that the second processor (3) checks one bit of the safeguard word (14) at specified time intervals which depend on the function assigned to the bit.

7. Method according to Claim 1, characterized in that at least one bit of the data word (13) has the value 1, i.e. a high state, and at least one bit of the data word (13) has the value 0, i.e. a low state.

## Revendications

1. Procédé pour vérifier l'aptitude au fonctionnement d'une première unité de calcul (2) à laquelle est transmis par une deuxième unité de calcul (3), un mot de données (13) qui est modifié par la première unité de calcul (2) et dans lequel la deuxième unité de calcul (3) vérifie si le mot de données (14) est modifié par la première unité de calcul avant un instant prédéfini, caractérisé
- en ce qu'au moins un bit du mot de données(13, 14) est associé à une fonction,
- en ce que le bit correspondant est modifié par la première unité de calcul (2) lorsque la fonction est exécutée par la première unité de calcul (2).

2. Procédé selon la revendication 1, caractérisé en ce que, à un instant prédéfini (T1, T3), la deuxième unité de calcul (3) transmet un mot de données (13), en ce que la première unité de calcul (2) compare le mot de données (13) à un mot de référence (12) et inscrit dans un mot de sécurité (14) les bits qui sont différents des bits correspondants du mot de référence (12), en ce que, après l'exécution d'une fonction, la première unité de calcul (2) modifie le bit du mot de sécurité (14) qui correspond la fonction et en ce que, à un instant prédéfini (T3, T4), la première unité de calcul (2) transmet le mot de sécurité (14) à la deuxième unité de calcul (3).

3. Procédé selon la revendication 1, caractérisé en ce que la deuxième unité de calcul (3) calcule un nouveau mot de données à partir du mot de données existant jusqu'alors et le transmet à la première unité de calcul (2) à un instant prédéterminé (T3), la deuxième unité de calcul (3) modifiant alors dans le nouveau mot de données, comparativement au mot de données existant jusqu'alors, au moins le bit dont la fonction doit être exécutée par la première unité de calcul (2) dans un laps de temps prédéfini.

4. Procédé selon la revendication 1, caractérisé en ce que la première unité de calcul (2) enregistre en qualité de mot de référence (12) le mot de données (13) fourni par la deuxième unité de calcul (3) et l'utilise comme mot de référence (12) lors de la comparaison avec le mot de données (13) immédiatement suivant.

5. Procédé selon la revendication 1, caractérisé en ce que la première unité de calcul (2) envoie le mot de données modifié (13) à la deuxième unité de calcul (3) en qualité de mot de sécurité (14) et en ce que la deuxième unité de calcul (3) compare au moins un bit du mot de sécurité (14) à une valeur de comparaison.

6. Procédé selon la revendication 5, caractérisé en ce que la deuxième unité de calcul (3) vérifie un bit du mot de sécurité (14) à des intervalles de temps prédéfinis qui dépendent de la fonction associée au bit.

7. Procédé selon la revendication 1, caractérisé en ce qu'au moins un bit du mot de données (13) présente la valeur 1, c'est-à-dire un état haut et au moins un bit du mot de données (13) la valeur 0, c'est-à-dire un état bas.
